(19) **Europäisches Patentamt**
**European Patent Office**
**Office européen des brevets**

(11) **EP 3 889 846 A1**

(12) **EUROPEAN PATENT APPLICATION**
published in accordance with Art. 153(4) EPC

(43) Date of publication:
**06.10.2021 Bulletin 2021/40**

(51) Int Cl.:
**G06N 3/08** (2006.01)

(21) Application number: **19910606.3**

(22) Date of filing: **24.01.2019**

(86) International application number:
**PCT/CN2019/072895**

(87) International publication number:
**WO 2020/147142 (23.07.2020 Gazette 2020/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2019 CN 201910041235**

(71) Applicant: **Huawei Technologies Co., Ltd.**
**Longgang**
**Shenzhen, Guangdong 518129 (CN)**

(72) Inventors:
- **BAI, Xiaolong**
  **Shenzhen, Guangdong 518129 (CN)**
- **LI, Pengfei**
  **Shenzhen, Guangdong 518129 (CN)**
- **ZHANG, Zhenyu**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **DEEP LEARNING MODEL TRAINING METHOD AND SYSTEM**

(57) This application provides a deep learning model training method. The method includes: generating N first gradient sets in BP calculation in the $j^{th}$ iteration of N deep learning models; adjusting a communication sequence of gradients included in each of the first gradient sets, where the gradients included in each of the first gradient sets are not sent to parameter storage space in a generation sequence of the gradients included in each of the first gradient sets; and separately sending, according to an adjusted communication sequence of the gradients, the gradients included in each of the N first gradient sets to the parameter storage space. According to the method, a sequence of transmitting a gradient obtained in a current iteration process to the parameter storage space is adjusted, to increase training efficiency of the deep learning model.

FIG. 3

EP 3 889 846 A1

## Description

This application claims priority to Chinese Patent Application No. 201910041235.8, filed with the Chinese Patent Office on January 16, 2019 and entitled "DEEP LEARNING MODEL DISTRIBUTED TRAINING METHOD AND SYSTEM", which is incorporated herein by reference in its entirety.

## TECHNICAL FIELD

This application relates to the field of artificial intelligence, and more specifically, to a deep learning model training method and a system for performing the training method.

## BACKGROUND

Artificial intelligence (artificial intelligence, AI) is a theory, a method, a technology, or an application system that simulates, extends, and expands human intelligence by using a digital computer or a machine controlled by the digital computer, to sense an environment, obtain knowledge, and obtain an optimal result by using the knowledge. In other words, the artificial intelligence is a branch of computer science, and is intended to understand essence of intelligence and produce a new intelligent machine that can react in a manner similar to the human intelligence. The artificial intelligence is to study design principles and implementation methods of various intelligent machines, to enable the machines to have perception, inference, and decision-making functions. Researches in the artificial intelligence field include a robot, natural language processing, computer vision, decision-making and inference, human-computer interaction, recommendation and search, an AI basic theory, and the like.

In the AI field, deep learning is a learning technology based on a deep neural network algorithm. A deep learning model includes forward propagation (forward propagation, FP) calculation and back propagation (back propagation, BP) calculation. The FP calculation is used to calculate an output of a neuron at each layer based on a parameter matrix corresponding to the neuron at the layer, and the BP calculation is used to calculate a gradient corresponding to the neuron at each layer based on an error between a predicted value generated based on the FP calculation and prior knowledge, so that in FP calculation in a next iteration, the parameter matrix corresponding to the neuron at each layer is corrected based on the gradient obtained through the BP calculation.

There is usually a relatively huge amount of training data, training of the deep learning model is generally performed in a distributed manner, and the training is completed based on the training data in the distributed manner by using a plurality of deep learning models. Therefore, gradients generated based on each time of BP calculation need to be synchronized between the deep learning models, to implement synchronous training. A conventional gradient synchronization method in a training process of a distributed deep learning model leads to low training efficiency.

## SUMMARY

This application provides a deep learning model training method. A sequence of transmitting gradients obtained through BP calculation in a current iteration process to parameter storage space is adjusted, to increase training efficiency of a deep learning model.

According to a first aspect, a deep learning model training method is provided. The method is applied to a training system, the training system includes N deep learning models, and each of the deep learning models includes n layers of neurons. A training process of each of the deep learning models includes a plurality of iterations, and each iteration includes forward propagation FP calculation and back propagation BP calculation, where N is a positive integer greater than 1, and n is a positive integer greater than 1. The method includes: generating N first gradient sets in BP calculation in the $j^{th}$ iteration of the N deep learning models; in a process of generating the N first gradient sets, adjusting a communication sequence of gradients included in each first gradient set; separately sending, to parameter storage space of the training system according to an adjusted communication sequence of the gradients included in each first gradient set, the gradients included in each of the N first gradient sets; then obtaining a second gradient set based on the N first gradient sets stored in the parameter storage space; and correcting a parameter matrix of a neuron at each layer of each deep learning model based on a gradient included in the second gradient set, to perform FP calculation in the $(j + 1)^{th}$ iteration on each deep learning model.

It should be understood that each first gradient set includes a gradient corresponding to a parameter matrix of a neuron at each layer of one deep learning model, and j is a positive integer greater than 0.

It should be further understood that after the gradient included in each of the N first gradient sets is separately sent to the parameter storage space of the training system according to the adjusted communication sequence of the gradients included in each first gradient set, an average value of gradients corresponding to the parameter matrix of the neuron at each layer of each of the N deep learning models can be calculated.

In a possible implementation, weighted average calculation may be performed on the gradients of the neuron at each layer that are included in each of the N first gradient sets, so that the average value of the gradients corresponding to the parameter matrix of the neuron at each layer of each of the N deep learning models can be calculated. Average values of gradients corresponding to parameter matrices of neurons at all layers constitute the second gradient set. In other words, the second gradient set includes the average values of the gradients corresponding to the parameter matrices of the neurons at all the layers of the N deep learning models.

In the foregoing technical solution, a sequence of transmitting $g_i^j$ obtained through BP calculation to the parameter storage space in a current iteration process may be adjusted, to reduce an iteration time of the deep learning model in the current iteration process, and increase iteration efficiency of the deep learning model.

In a possible implementation, a sequence of sending a gradient corresponding to a parameter matrix of a neuron at the $a^{th}$ layer to the parameter storage space is adjusted to be before a sequence of sending a gradient corresponding to a parameter matrix of a neuron at the $b^{th}$ layer to the parameter storage space, where b is less than or equal to n, a is less than b, and a is a positive integer greater than 0.

In the foregoing technical solution, the sequence of sending the gradient corresponding to the parameter matrix of the neuron at the $a^{th}$ layer to the parameter storage space is adjusted to before the sequence of sending the gradient corresponding to the parameter matrix of the neuron at the $b^{th}$ layer to the parameter storage space. In this way, a time difference between an end time for BP calculation in this iteration and a start time for FP calculation in a next iteration can be reduced, and the iteration time of the deep learning model can be reduced.

In another possible implementation, the communication sequence of the gradients included in each first gradient set may be adjusted according to a gradient communication policy. The gradient communication policy is set based on at least one of the following parameters: a communication bandwidth between the deep learning model and the parameter storage space, a value of the gradient corresponding to the parameter matrix of the neuron at each layer of the deep learning model, and a time required by the neuron at each layer of the deep learning model in FP calculation.

It should be noted that the deep learning model is any one or more of the N deep learning models.

Specifically, before a sending sequence of the gradient corresponding to the parameter matrix of the neuron at the $a^{th}$ layer is adjusted, the gradient communication policy may be first calculated based on the communication bandwidth between the deep learning module and the parameter storage space, a value of the gradient corresponding to the parameter matrix of the neuron at the $b^{th}$ layer, and a time period between a moment at which the gradient corresponding to the parameter matrix of the neuron at the $b^{th}$ layer starts to be sent to the parameter storage space and a time at which FP calculation corresponding to a neuron at the $(b - 1)^{th}$ layer in the $(j + 1)^{th}$ iteration of the deep learning model is completed. Then, according to a gradient adjustment policy, the sequence of sending the gradient corresponding to the parameter matrix of the neuron at the $a^{th}$ layer to the parameter storage space is adjusted to be before the sequence of sending the gradient corresponding to the parameter matrix of the neuron at the $b^{th}$ layer to the parameter storage space.

It should be noted that the gradient communication policy includes a sequence of transmitting the gradients in the first gradient set to a parameter storage area.

In the foregoing technical solution, the gradient communication policy may be determined based on the communication bandwidth between the deep learning module and the parameter storage space, the value of the gradient corresponding to the parameter matrix of the neuron at each layer of the deep learning model, and the time required by the neuron at each layer of the deep learning model in the FP calculation. Therefore, the communication sequence of the gradients in the first gradient set of the deep learning model may be adjusted according to an optimal gradient communication policy, so that a subsequent iterative training speed is faster, and training efficiency of the deep learning model is increased.

In a possible implementation, the sequence of sending the gradient corresponding to the parameter matrix of the neuron at the $a^{th}$ layer is adjusted to be before a sequence of sending the gradient corresponding to the parameter matrix of the neuron at the $b^{th}$ layer to the parameter storage space, the gradient corresponding to the parameter matrix of the neuron at the $b^{th}$ layer is sent to the parameter storage space as far as possible before a neuron at the $(b - 1)^{th}$ layer in the $(j + 1)^{th}$ iteration completes corresponding FP calculation.

In another possible implementation, the method further includes: obtaining the iteration time of the deep learning model; and adjusting the gradient communication policy based on the iteration time.

It should be understood that the obtained iteration time of the deep learning model may be a sum of a time for BP calculation in a current iteration process and a time for FP calculation in a next iteration process. To be specific, the iteration time of the deep learning model includes a time for BP calculation in the $L^{th}$ iteration of the deep learning model and a time for FP calculation in the $(L + 1)^{th}$ iteration of the deep learning model, where L is a positive integer greater than j.

It should be noted that the deep learning model is any one or more of the N deep learning models.

In the foregoing technical solution, the gradient communication policy of the deep learning model may be adjusted based on the fed-back iteration time of the deep learning model. In this way, the optimal gradient communication policy can be determined based on an actual iteration time of the deep learning model, and an iterative training speed of the deep learning model can be increased.

According to a second aspect, a deep learning model training system is provided. The training system includes N deep learning models, a gradient communications module, a gradient update module, a correction module, and parameter storage space. Each of the deep learning models includes n layers of neurons, and a training process of each of the deep learning models includes a plurality of iterations. Each iteration includes forward propagation FP calculation and back propagation BP calculation, where N is a positive integer greater than 1, and n is a positive integer greater than 1.

Each deep learning module of the N deep learning models is configured to generate a first gradient set in BP calculation in the $j^{th}$ iteration. Each first gradient set includes a gradient corresponding to a parameter matrix of a neuron at each layer of each of the deep learning models, and j is a positive integer greater than 0.

The gradient communications module is configured to: adjust a communication sequence of the gradients included in each first gradient set, and separately send, to the parameter storage space of the training system according to an adjusted communication sequence of the gradients included in each first gradient set, the gradient included in each of the N first gradient sets.

The gradient update module is configured to obtain a second gradient set based on the N first gradient sets stored in the parameter storage space.

The correction module is configured to correct the parameter matrix of the neuron at each layer of each deep learning model based on a gradient included in the second gradient set, to perform FP calculation in the $(j + 1)^{th}$ iteration of each deep learning model.

It should be noted that the gradient communications module may include two submodules. One submodule is an adjustment submodule, configured to adjust the communication sequence of the gradients included in each first gradient set. The other submodule is a communications submodule, configured to separately send, to the parameter storage space of the training system according to the adjusted communication sequence of the gradients included in each first gradient set, the gradient included in each of the N first gradient sets.

It should be further noted that in a distributed model training system that includes at least one model training server and one parameter server, the correction module may be a module in the parameter server, or may be a module in the at least one model training server. In an example, the correction module is in the parameter server, and the correction module is configured to correct a parameter matrix of a neuron at each layer of any one of the deep learning models based on the gradient included in the second gradient set. In addition, a corrected parameter matrix corresponding to the neuron at each layer is stored in parameter storage space of the parameter server, so that the at least one model training server obtains the corrected parameter matrix from the parameter storage space in a model training process in a next iteration. In another example, the correction module is in the at least one model training server, and after the at least one model training server obtains the second gradient set from the parameter storage space of the parameter server, the correction module may correct the parameter matrix of the neuron at each layer of any one of the deep learning models based on the second gradient set, so that the parameter matrix can be used in FP calculation in the $(j + 1)^{th}$ iteration of the any one of the deep learning models of the training system.

In the foregoing technical solution, a sequence of transmitting $g_i^j$ obtained through BP calculation to the parameter storage space in a current iteration process may be adjusted, to reduce an iteration time of the deep learning model in the current iteration process, and increase iteration efficiency of the deep learning model.

In a possible implementation, the gradient communications module is specifically configured to: adjust a sequence of sending a gradient corresponding to a parameter matrix of a neuron at the $a^{th}$ layer to the parameter storage space to be before a sequence of sending a gradient corresponding to a parameter matrix of a neuron at the $b^{th}$ layer to the parameter storage space, where b is less than or equal to n, a is less than b, and a is a positive integer greater than 0.

In another possible implementation, the gradient communications module is specifically configured to adjust, according to a gradient communication policy, the communication sequence of the gradients included in each first gradient set.

The gradient communication policy is set based on at least one of the following parameters: a communication bandwidth between the deep learning model and the parameter storage space, a value of the gradient corresponding to the parameter matrix of the neuron at each layer of the deep learning model, and a time required by the neuron at each layer of the deep learning model in FP calculation.

It should be noted that the deep learning model is any one or more of the N deep learning models.

In another possible implementation, the system further includes a feedback module.

The feedback module is configured to: obtain the iteration time of the deep learning model, and feed back the obtained iteration time to the gradient communications module.

It should be understood that the obtained iteration time of the deep learning model may be a sum of a time for BP calculation in a current iteration process and a time for FP calculation in a next iteration process.

The gradient communications module is further configured to adjust the gradient communication policy based on the iteration time that is of the deep learning model and that is fed back by the feedback module.

It should be understood that in the distributed model training system that includes at least one model training server and one parameter server, the feedback module is a set of feedback modules in the at least one model training server.

According to a third aspect, a deep learning model training system is provided. The training system includes at least one computing node, and each computing node includes a memory and at least one processor. The memory is configured to store a program instruction, and when the training system runs, the at least one processor of the at least one computing node executes the program instruction in the memory to perform the method according to any one of the first aspect or the possible implementations of the first aspect.

In a possible implementation, the deep learning model training system includes one parameter server and at least one model training server. One model training server may be used as one computing node, and N deep learning modules and a gradient communications module may separately run in the at least one model training server. A gradient update module may run in the parameter server in the training system. A correction module may run in the at least one model training server or the parameter server.

In a possible implementation, in the deep learning model training system that includes one parameter server and at least one model training server, a feedback module runs in the at least one model training server.

It should be noted that in the training system that includes one parameter server and at least one model training server, the gradient communications module may be a set of gradient communications modules in the at least one model training server, and the correction module may be a set of correction modules in the at least one model training server. The feedback module may be a set of feedback modules in the at least one model training server.

In another possible implementation, the deep learning model training system includes one model training server. One model training server includes at least one processor, and one processor may be used as one computing node. N deep learning modules, a gradient communications module, a gradient update module, and a correction module may separately run in the at least one processor.

In a possible implementation, in the deep learning model training system that includes one model training server, the feedback module runs in the at least one processor of the model training server.

It should be noted that in the training system that includes one model training server, each of the gradient communications module, the gradient update module, the correction module, and the feedback module may be a set of foregoing modules included in the at least one processor in the model training server.

According to a fourth aspect, a non-transient readable storage medium is provided, including a program instruction. When the program instruction is run by at least one computing node, the at least one computing node performs the method according to any one of the first aspect and the possible implementations of the first aspect.

According to a fifth aspect, a computer program product is provided, including a program instruction. When the program instruction is run by at least one computing node, the at least one computing node performs the method according to any one of the first aspect and the possible implementations of the first aspect.

Based on the implementations provided in the foregoing aspects, this application may be further combined to provide more implementations.

## BRIEF DESCRIPTION OF DRAWINGS

FIG. 1 is a schematic block diagram of a deep learning model 100 according to an embodiment of this application;

FIG. 2A and FIG. 2B are a schematic structural diagram of a distributed training system 200 of a deep learning model 100 according to an embodiment of this application;

FIG. 3 is a schematic block diagram of communication between each model training server and a parameter server according to an embodiment of this application;

FIG. 4 is a schematic structural diagram of a distributed training system 400 of a deep learning model 100 according to an embodiment of this application;

FIG. 5 is a schematic flowchart of a deep learning model training method according to an embodiment of this application;

FIG. 6 is a schematic architectural diagram of a deep learning model training system according to an embodiment of this application;

FIG. 7 is a schematic flowchart of a method for acceleration training of a deep learning model according to an embodiment of this application;

FIG. 8(a) is a comparison diagram of iteration time effects of a method for acceleration training of a deep learning model according to an embodiment of this application; and

FIG. 8(b) is a comparison diagram of iteration time effects of a method for acceleration training of a deep learning model according to an embodiment of this application.

## DESCRIPTION OF EMBODIMENTS

The following describes technical solutions of this application with reference to accompanying drawings.

In the AI field, deep learning is a learning technology based on a deep neural network algorithm. A deep learning model includes an input layer, a hidden layer, and an output layer. The deep learning model processes data by using a plurality of nonlinear transformations.

It should be understood that a neural network is a behavior feature that imitates an animal neural network. This type of network depends on complexity of a system, and processes information by adjusting a relationship between a large quantity of internal nodes that are connected to each other.

It should be further understood that a deep neural network (the deep learning model) may be understood as a neural network having a plurality of hidden layers, and "a plurality of" herein does not have a special measurement standard. Theoretically, a model with a larger quantity of parameters indicates higher complexity and a larger "capacity", and indicates that the model can complete a more complex learning task. A process of training the deep neural network is a process of learning a parameter matrix, and a final objective of the process of training the deep neural network is to obtain a parameter matrix of a neuron at each layer of the trained deep neural network (the parameter matrix of the neurons at each layer includes a weight corresponding to each neuron included in the neurons at the layer).

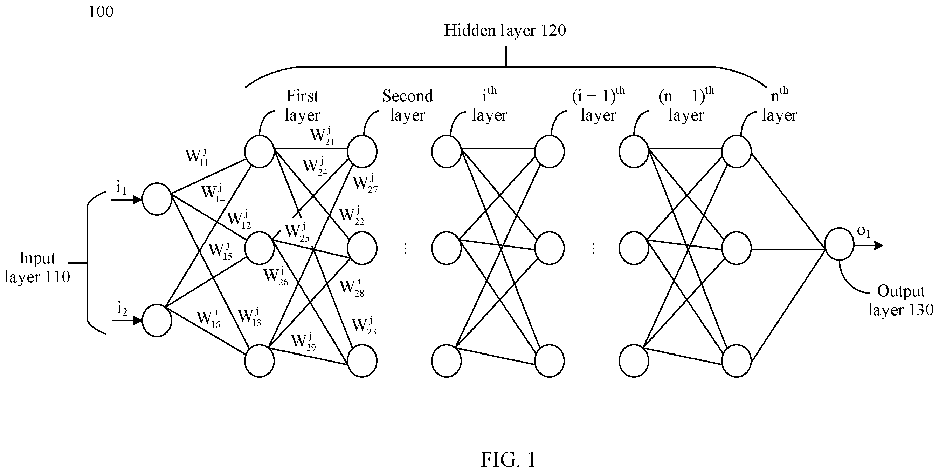

With reference to FIG. 1, the following describes in detail a possible deep learning model training process corresponding to the embodiments of this application.

FIG. 1 is a schematic block diagram of a deep learning model 100 according to an embodiment of this application. The deep learning model 100 may include an input layer 110, a hidden layer 120, and an output layer 130.

It should be understood that in this embodiment of this application, an example in which the hidden layer 120 includes n (n is greater than 1) layers of neurons is used for description.

It should be further understood that each of the input layer 110, the output layer 130, and the hidden layer 120 includes one or more neurons. In FIG. 1, an example in which the input layer 110 includes two neurons, each of the n layers of the hidden layer 120 includes three neurons, and the output layer 130 includes one neuron is used for description.

The deep learning model 100 shown in FIG. 1 may be a fully connected neural network or a convolutional neural network (convolutional neural network, CNN). When all neurons at each layer are connected to all neurons at a next layer (none of weights w of all the neurons at each layer is 0), the deep learning model 100 is a fully connected neural network model. When all neurons at each layer are not connected to all neurons at a next layer (not all weights w of all the neurons at each layer is 0), the deep learning model 100 is a CNN model.

Referring to FIG. 1, the deep learning model 100 may include forward propagation (forward propagation, FP) calculation and back propagation (back propagation, BP) calculation.

The following describes in detail a process of performing FP calculation in a computing node.

In the process of performing FP calculation, training data, for example, pixel information of an input image, is obtained, and the training data is used as an input ($i_1$, $i_2$) of the input layer 110 of the deep learning model 100. A prediction result may be output from the output layer 130 after the input of the input layer 110 passes through a plurality of neurons at the hidden layer 120. Specifically, a neuron at each layer of the hidden layer 120 corresponds to one parameter matrix. A product of the input of the input layer 110 and a parameter matrix of a neuron at the first layer is used as an input of the neuron at the first layer of the hidden layer 120. An activation function (for example, a sigmoid function) in the neuron at the first layer is performed on the input of the neuron at the first layer of the hidden layer 120, to output an output value of the neuron at the first layer. A product of the output value of the neuron at the first layer of the hidden layer 120 and a parameter matrix of a neuron at the second layer is used as an input of the neuron at the second layer of the hidden layer 120. Similarly, by analogy, the prediction result is finally output from the output layer 130.

In an actual application, weights in these parameter matrices need to be corrected in a large amount of training. Each parameter matrix constituted by weights obtained through training may extract pixel information from a to-be-inferred image input by a user, to help the deep learning model 100 perform correct inference on the to-be-inferred image.

In a $j^{\text{th}}$ iteration process of the FP calculation, an input of the first neuron at the first layer is $A^j_{11} = w^j_{11} \times i_1 + w^j_{14} \times i_2$, and an output of the first neuron at the first layer is $f(A^j_{11})$. An input of the second neuron at the first layer is $A^j_{12} = w^j_{12} \times i_1 + w^j_{15} \times i_2$, and an output of the second neuron at the first layer is $f(A^j_{12})$. An input of the third neuron at the first layer is $A^j_{13} = w^j_{13} \times i_1 + w^j_{16} \times i_2$, and an output of the third neuron at the first layer is

$f(A_{13}^j)$ , where $f(A_{11}^j)$ is an activation function whose input is $A_{11}^j$ .

In the jth iteration process, the input of the neuron at the first layer is:

$$\begin{pmatrix} w_{11}^j \times i_1 + w_{14}^j \times i_2 \\ A_{12} = w_{12}^j \times i_1 + w_{15}^j \times i_2 \\ w_{13}^j \times i_1 + w_{16}^j \times i_2 \end{pmatrix} = \begin{pmatrix} w_{11}^j & w_{14}^j \\ w_{12}^j & w_{15}^j \\ w_{13}^j & w_{16}^j \end{pmatrix} \times \begin{pmatrix} i_1 \\ i_2 \end{pmatrix}$$

Therefore, the input of the neuron at the first layer may be represented as $A_1^j = w_1^j \times B_0^j$ , and the output of the neuron at the first layer may be represented as $B_1^j = f(A_1^j)$ .

$$A_1^j = \begin{pmatrix} A_{11} \\ A_{12} \\ A_{13} \end{pmatrix}, \ w_1^j = \begin{pmatrix} w_{11}^j & w_{14}^j \\ w_{12}^j & w_{15}^j \\ w_{13}^j & w_{16}^j \end{pmatrix}, \text{ and } B_0^j = \begin{pmatrix} i_1 \\ i_2 \end{pmatrix}$$

j is used to represent a quantity of iteration times, and is usually equal to a quantity of times that the input layer 110 obtains the input $(i_1, i_2)$. $w_1^j$ is used to represent a parameter matrix of the neuron at the first layer in the jth iteration process.

A product of an output $B_1$ of the neuron at the first layer and the parameter matrix of the neuron at the second layer may be used as the input of the neuron at the second layer. Therefore, in the jth iteration process of the FP, the input of the neuron at the second layer may be represented as $A_2^j = w_2^j \times B_1^j$ , and the output of the neuron at the second layer may be represented as $B_2^j = f(A_2^j)$ .

Likewise, in the jth iteration process of the FP, an input of a neuron at the ith layer may be represented as $A_i^j = w_i^j \times B_{i-1}^j$ , and an output of the neuron at the ith layer may be represented as $B_i^j = f(A_i^j)$ , where $1 \le i \le n$.

The following describes in detail a process of performing BP calculation in a computing node.

In a process of training the deep learning model 100, it is expected that a prediction value $o_1$ output from the output layer 130 of the deep learning model 100 is as close as possible to prior knowledge (prior knowledge) of the training data. The prior knowledge is also referred to as ground truth (ground truth). Generally, the prior knowledge includes a prediction result corresponding to training data provided by a person. Therefore, a current prediction value can be compared with the prior knowledge. Then, a parameter matrix at each layer of the deep learning model 100 is updated based on a difference between the current predicted value and the prior knowledge (certainly, there is usually an initialization process before a first update, to be specific, the parameter matrix corresponding to the neuron at each layer of the hidden layer 120 of the deep learning model 100 is initialized). In addition, an error BP algorithm is used to correct a weight of the parameter matrix in the deep learning model 100 in the process of training the deep learning model 100, to minimize an error loss of the deep learning model 100.

Specifically, there may be an error between the prediction value generated in the process of performing FP calculation and the prior knowledge. If the output prediction value is greater than the prior knowledge, the weight in the parameter matrix may be adjusted to make the output prediction value smaller. If the output prediction value is smaller than the prior knowledge, the weight in the parameter matrix may be adjusted to make the output prediction value greater. The BP calculation is an error-dominant reverse motion, and aims to obtain an optimal parameter matrix of the neuron at each layer.

It should be understood that the training data input by the user may include training data used as an input and the prediction result corresponding to the training data provided by the person.

In an example, the deep learning model 100 is applied to the image recognition field. The training data input by the deep learning model 100 is pixel information of an image, and the prior knowledge corresponding to the training data is a label "dog" of the image. The training data is input to the input layer 110, and after FP calculation of the deep learning model 100 is performed on the training data, a prediction value output from the output layer 130 is compared with the prior knowledge. For example, if the prediction value output from the output layer 130 is "cat", the parameter matrix at each layer in the deep learning model 100 may be updated based on an error between the prediction value and the prior knowledge "dog".

In the $j^{th}$ iteration process, an error E between the output prediction value $o_1$ and the prior knowledge can be obtained through the BP calculation. In addition, a weight in the parameter matrix of the neuron at each layer in the deep learning model 100 may be corrected based on the error E along a direction of the output layer 130, the hidden layer 120, and the input layer 110. Specifically, correction of the weight may be calculating a gradient $g_i^j$ of the weight in the parameter matrix. The gradient $g_i^j$ may be a derivative of the weight in the parameter matrix by using the error E, where $1 \leq i \leq n$.

A $(j + 1)^{th}$ iteration process of the deep learning model 100 is similar to the $j^{th}$ iteration process of the deep learning model 100, and the deep learning model 100 first performs FP calculation, and then performs BP calculation. For example, in an FP calculation process in the $(j + 1)^{th}$ iteration, the weight in the parameter matrix is corrected based on the gradient $g_i^j$ obtained through the FP calculation of the $j^{th}$ iteration, and an output prediction value is calculated based on the corrected parameter matrix. In a BP calculation process in the $(j + 1)^{th}$ iteration, a gradient $g_i^{j+1}$ of the weight in the parameter matrix is calculated based on the error E between the output value obtained through the FP calculation in the $(j + 1)^{th}$ iteration and the prior knowledge, so that the weight in the parameter matrix can be corrected again based on $g_i^{j+1}$ in a $(j + 2)^{th}$ iteration process. The weight in the parameter matrix is continuously corrected in a plurality of iteration processes, so that an output value predicted by the deep learning model 100 is as close as possible to the prior knowledge of the training data.

Specifically, in the FP calculation in the $(j + 1)^{th}$ iteration, when the input and the output of the neuron at the $i^{th}$ layer are calculated, a parameter matrix of the neuron at the $i^{th}$ layer is changed to $w_i^{j+1} = w_i^j - g_i^j$. For a process of calculating an input and an output of the neuron at each layer based on $w_i^{j+1}$, refer to the foregoing description of the FP calculation in the $j^{th}$ iteration. Details are not described herein again.

It should be noted that the parameter matrix calculation formula shown above is a possible implementation, or may be another variation of the formula, and falls within the protection scope of the embodiments of this application.

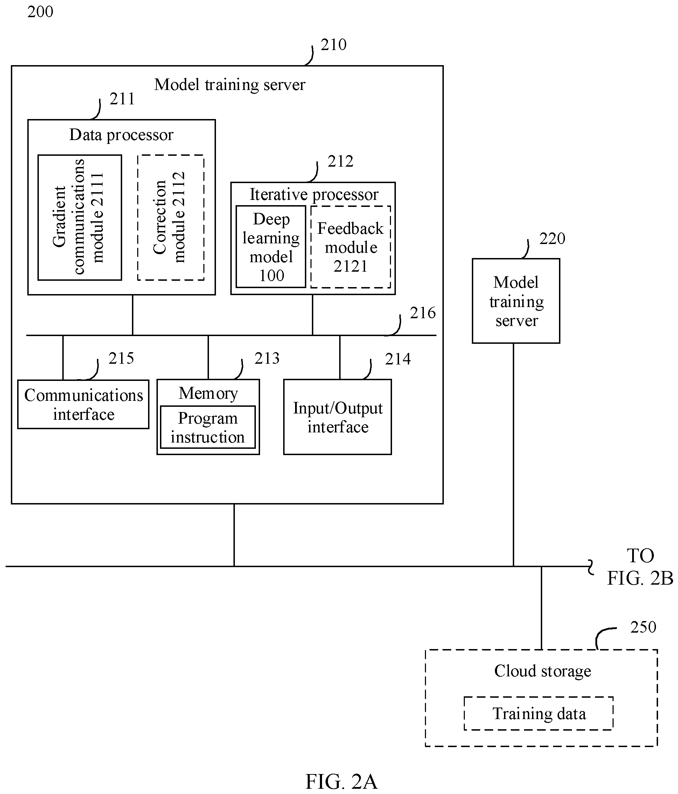

In this embodiment of this application, the training process (including the FP calculation process and the BP calculation process) of the deep learning model 100 may be completed in a training system including at least one computing node. The at least one computing node may be at least one model training server or at least one processor in one model training server. The following describes a scenario of training the deep learning model 100 with reference to FIG. 2A to FIG. 4.

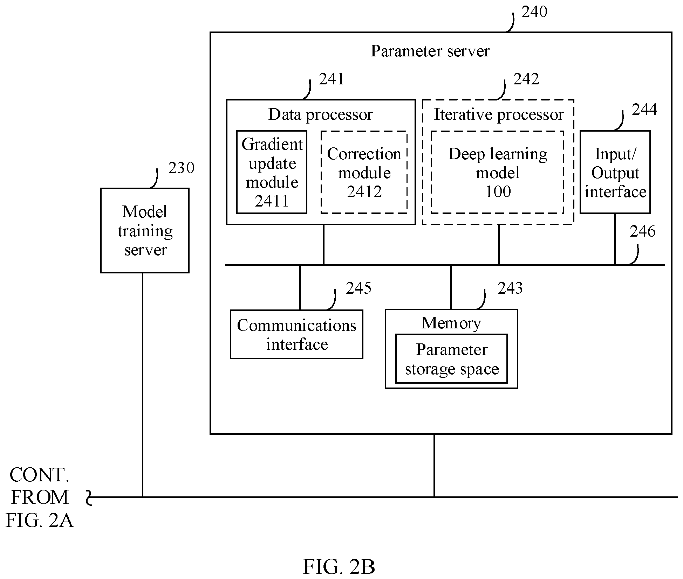

FIG. 2A and FIG. 2B are a schematic structural diagram of a distributed training system 200 of a deep learning model 100 according to an embodiment of this application. The distributed training system 200 shown in FIG. 2A and FIG. 2B may include a model training server 210, a model training server 220, a model training server 230, a parameter server 240, and a cloud storage 250.

Generally, precision of the deep learning model increases with an amount of training data. However, increase in the amount of the training data increases computing load. Therefore, a distributed deep learning training technology emerges. Distributed deep learning training aims to increase computing resources by using a plurality of computing nodes, and iterate the trained model by using the plurality of computing nodes, to increase a training speed of the deep learning model.

Referring to FIG. 2A and FIG. 2B, the distributed training system 200 may include at least one model training server, and one model training server may be used as one computing node. For ease of description, three model training servers are used as an example for description in FIG. 2A and FIG. 2B. Structures of the model training server 220 and the model training server 230 are similar to a structure of the model training server 210. The following describes the model training server 210 in detail.

(1) Model training server 210:

The model training server 210 includes at least one processor, a memory 213, an input/output interface 214, a communications interface 215, and a bus 216.

The at least one processor may be connected to the memory 213. The memory 213 may be configured to store program code and the training data. The memory 213 may be a storage unit inside the at least one processor, an external storage unit independent of the at least one processor, or a component including a storage unit inside the at least one processor and an external storage unit independent of the at least one processor.

The memory 213 may be a solid-state drive (solid state drive, SSD), a hard disk drive (hard disk drive, HDD), a read-only memory (read-only memory, ROM), a random access memory (random access memory, RAM), or the like.

The at least one processor may obtain the program code and the training data from the memory 213, and train the deep learning model 100. As an example instead of a limitation, the at least one processor may perform iterative calculation (for example, the FP calculation and the BP calculation shown in FIG. 1) based on the program code and the training data, or may send (push), to the parameter server 240 in the distributed training system 200, a gradient $g_i^j$ that is of a weight in a parameter matrix and that is obtained through the BP calculation.

Specifically, the at least one processor may include two types of processors. One type of processor includes at least one data processor 211, and the other type of processor includes at least one iterative processor 212. As an example instead of a limitation, the data processor 211 may be a central processing unit (central processing unit, CPU), and the iterative processor 212 may be an embedded neural processing unit (neural-network process units, NPU) or a graphics processing unit (graphics processing unit, GPU).

A deep learning model 100 runs in the iterative processor 212, and BP calculation is performed on the deep learning model 100, to calculate a gradient $g_i^j$ of a weight in a parameter matrix of a neuron at each layer. The data processor 211 may be configured to send (push) the gradient $g_i^j$ obtained through the BP calculation to the parameter server 240.

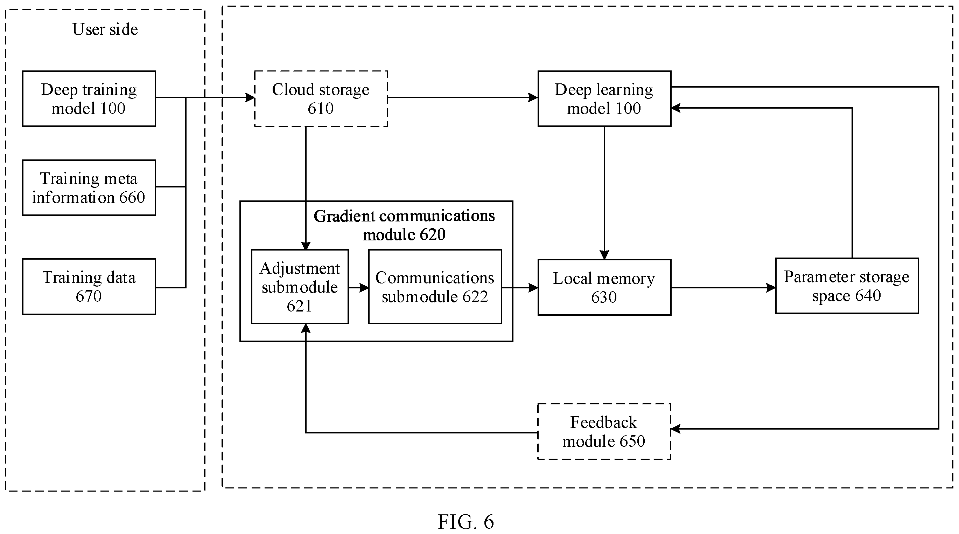

A gradient communications module 2111 may run in the data processor 211, and the deep learning module 100 may run in the iterative processor 212. Optionally, a feedback module 2121 may run in the iterative processor 212. A correction module may run in the data processor 211, or may run in the parameter server 240. For example, a correction module 2112 runs in the data processor 211. For another example, a correction module 2412 runs in a data processor 241 of the parameter server 240. For details about the modules running in the data processor 211, refer to descriptions in FIG. 6. Details are not described herein.

Optionally, the model training server 210 may further include the bus 216. The memory 213, the input/output interface 214, and the communications interface 215 may be connected to the at least one processor (for example, the data processor 211 and the iterative processor 212) through the bus 216. The bus 216 may be a peripheral component interconnect (peripheral component interconnect, PCI) bus, an extended industry standard architecture (extended industry standard architecture, EISA) bus, or the like. The bus 216 may be classified into an address bus, a data bus, a control bus, and the like. For ease of representation, only one line is used to represent the bus in FIG. 2A and FIG. 2B, but this does not mean that there is only one bus or only one type of bus.

(2) Parameter server 240:

The parameter server 240 includes at least one data processor 241, a memory 243, an input/output interface 244, a communications interface 245, and a bus 246.

Parameter storage space in the memory 243 may store gradients $g_i^j$, of weights, that are separately sent by the model training server 210, the model training server 220, and the model training server 230.

The at least one data processor 241 may be connected to the memory 243, and the data processor 241 may be, for example, a CPU. The at least one data processor 241 may obtain, from the memory 243, the gradients $g_i^j$ separately sent by the model training server 210, the model training server 220, and the model training server 230, process a plurality of gradients $g_i^j$ pushed by the processor, and store the processed gradients $G_i^j$ in the memory 243. In an example, the at least one data processor 241 may perform weighted average calculation on the plurality of gradients $g_i^j$ separately pushed by the plurality of model training servers, to obtain $G_i^j$, and store the gradient average value $G_i^j$ in the memory 243. In a process of obtaining the gradient $G_i^j$ based on the plurality of gradients $g_i^j$, in addition to the weighted average calculation, another algorithm may also be used.

A gradient update module 2411 may run in the data processor 241. Optionally, a correction module 242 may further run in the data processor 241. For details about the modules running in the data processor 241, refer to descriptions in FIG. 6. Details are not described herein.

It should be noted that, in this embodiment of this application, in a j<sup>th</sup> iteration process, after the data processor 241 in the parameter server 240 calculates the gradient average value $G_i^j$ in FP calculation in the (j + 1)<sup>th</sup> iteration, $w_i^{j+1}$ in the parameter matrix in the (j + 1)<sup>th</sup> iteration further needs to be corrected based on the gradient average value $G_i^j$, and $w_i^{j+1}$ is stored in the parameter storage space of the memory 243, so that the model training server 210, the model training server 220, and the model training server 230 use $w_i^{j+1}$ in the (j + 1)<sup>th</sup> round of training.

In an example, $w_i^{j+1}$ may be calculated by the at least one data processor 241 in the parameter server 240, and $w_i^{j+1}$ is stored in the memory 243. In the FP calculation in the (j + 1)<sup>th</sup> iteration, the plurality of model training servers may directly obtain (pull) $w_i^{j+1}$ from the memory 243. In another example, $w_i^{j+1}$ may be calculated by the processor 212 in the model training server 210. In the FP calculation in the (j + 1)<sup>th</sup> iteration, the iterative processor 212 pulls the calculated gradient average value $G_i^j$ from the memory 243, calculates $w_i^{j+1}$ in the parameter matrix in the (j + 1)<sup>th</sup> iteration based on $G_i^j$, and stores $w_i^{j+1}$ in the memory 243, so that the model training server 210 uses $w_i^{j+1}$ in the (j + 1)<sup>th</sup> round of training.

Optionally, in some embodiments, the parameter server 240 may further include an iterative processor 242, and a deep learning model 100 may run in the iterative processor 242. In an example, the iterative processor 242 may be an NPU or a GPU.

It should be noted that the iterative processor 242 may also calculate the gradient average value $G_i^j$ based on the gradients $g_i^j$, of the weights, that are separately sent by the model training server 210, the model training server 220, and the model training server 230, and store the calculated gradient average value $G_i^j$ in the memory 243. The iterative processor 242 may further calculate $w_i^{j+1}$ in the parameter matrix in the (j + 1)<sup>th</sup> iteration based on $G_i^j$, and store $w_i^{j+1}$ in the memory 243, so that the model training server 210, the model training server 220, and the model training server 230 use $w_i^{j+1}$ in the (j + 1)<sup>th</sup> round of training.

(3) Cloud storage 250:

Optionally, in some embodiments, the system 200 may further include the cloud storage 250. The cloud storage 250 may be used as an external memory, and a user may store the program code and the training data in the external memory. The model training server 210 is used as an example. In a running process, the at least one processor may first store, in the memory 213, the program code and data that are stored in the cloud storage 250, so that the at least one processor may obtain the program code and the training data from the memory 213, and train the deep learning model 100 based on the program code and the training data.

It should be noted that the data stored in the cloud storage 250 may include the training data, the prior knowledge corresponding to the training data, an initial value of the parameter matrix corresponding to the neuron at each layer of the hidden layer 120 of each deep learning training model 100, and the like.

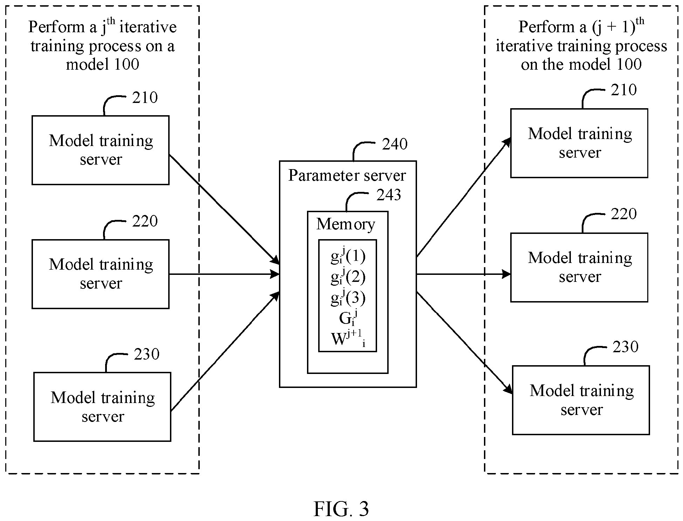

With reference to FIG. 3, the following further describes in detail a process of communication between the model training servers and the parameter server 240 in the system 200 shown in FIG. 2A and FIG. 2B.

It should be noted that, for ease of description, an internal structural diagram of the plurality of model training servers and the parameter server 240 is not drawn in detail in FIG. 3. For details, refer to the descriptions in FIG. 2A and FIG. 2B. Details are not described herein again.

Referring to FIG. 3, training processes of performing the j<sup>th</sup> iteration and the (j + 1)<sup>th</sup> iteration on the deep learning model 100 are used as an example. In the training process of the j<sup>th</sup> iteration, in the BP calculation, the at least one data processor 211 in the model training server 210 may push, to the memory 243 in the parameter server 240, a gradient $g_i^j(1)$ corresponding to a neuron that is at the i<sup>th</sup> hidden layer and that is calculated by the at least one iterative processor 212. Similarly, in the BP calculation, at least one data processor in the model training server 220 may push a calculated gradient $g_i^j(2)$ to the memory 243 in the parameter server 240, and at least one data processor in the model training server 230 may push a calculated gradient $g_i^j(3)$ to the memory 243 in the parameter server 240.

The at least one iterative processor 242 in the parameter server 240 may obtain the stored $g_i^j(1)$, $g_i^j(2)$, $g_i^j(3)$ from the memory 243, calculate a gradient average value $G_i^j$ based on $g_i^j(1)$, $g_i^j(2)$, and $g_i^j(3)$, and store $w_i^{j+1}$ in the parameter storage space of the memory 243, so that the model training server 210, the model training server 220, and the model training server 230 use $G_i^j$ in the (j + 1)$^{th}$ round of training. For a specific $G_i^j$ calculation process, refer to the embodiment corresponding to FIG. 2A and FIG. 2B.

Therefore, parameters stored in the parameter storage space of the memory 243 include $g_i^j(1)$, $g_i^j(2)$, $g_i^j(3)$, and $G_i^j$.

Optionally, in some embodiments, the at least one iterative processor 242 may further obtain the stored $G_i^j$ from the memory 243, calculate $w_i^{j+1}$ in the parameter matrix in the (j + 1)$^{th}$ iteration based on $G_i^j$, and store $w_i^{j+1}$ in the memory 243, so that the model training server 210 conveniently performs the BP calculation based on $w_i^{j+1}$ in the (j + 1)$^{th}$ round of training. Therefore, in some embodiments, the parameter storage space of the memory 243 further stores $w_i^{j+1}$.

In a BP calculation process of performing (j + 1)$^{th}$ iterative training on the deep learning model 100, the plurality of model training servers may obtain the stored parameters from the parameter server, and calculate a predicted output value by using an input value (the training data) and the parameter matrix $w_i^{j+1}$. In an example, in the BP calculation, the model training server 210 pulls the stored $G_i^j$ from the memory 243 in the parameter server 240, calculates the parameter matrix $w_i^{j+1}$ corresponding to the neuron at the i$^{th}$ hidden layer in the (j + 1)$^{th}$ iteration based on $G_i^j$, and calculates the predicted output value by using the input value and the parameter matrix $w_i^{j+1}$. Similarly, in the BP calculation, the model training server 220 pulls stored $G_i^j$ from the parameter server 240. In addition, in the BP calculation, the model training server 230 pulls stored $G_i^j$ from the parameter server 240. In another example, if the memory 243 in the parameter server 240 stores $w_i^{j+1}$, in the BP calculation, the model training server 210, the model training server 220, and the model training server 230 may separately pull the stored $w_i^{j+1}$ from the parameter server 242.

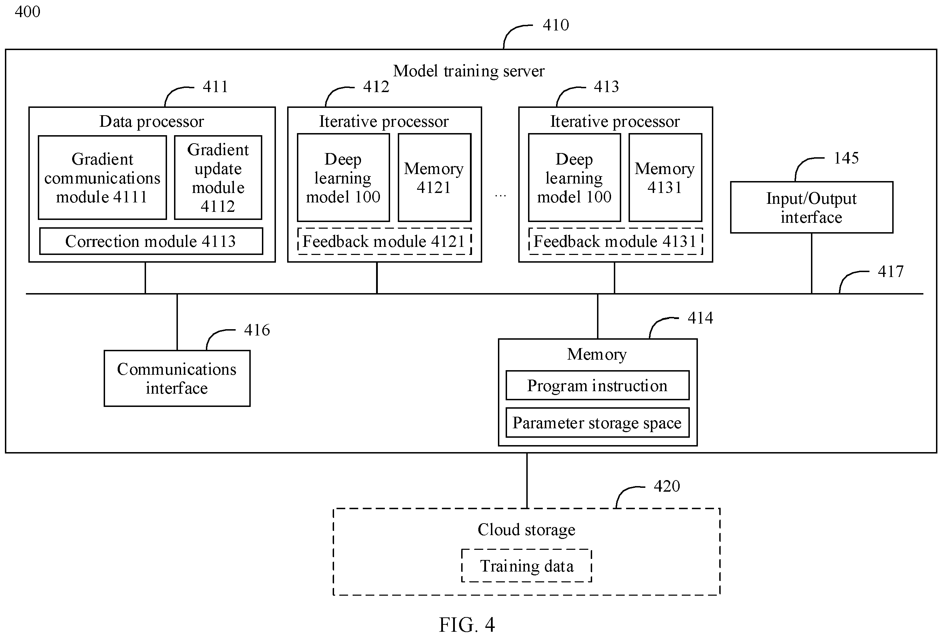

With reference to FIG. 4, the following describes in detail a scenario of training the deep learning model 100 by using an example in which a distributed training system includes one model training server, the model training server includes at least one processor, and the processor may be used as one computing node.

FIG. 4 is a schematic structural diagram of a distributed training system 400 of the deep learning model 400 according to an embodiment of this application. As shown in FIG. 4, the distributed training system 400 may include a model training server 410.

The model training server 410 may include at least one processor, a memory 414, an input/output interface 415, a communications interface 416, and a bus 417.

The at least one processor may be connected to the memory 414. The memory 414 may be configured to store program code and training data. The at least one processor may obtain the program code and the training data from the memory 414, and train the deep learning model 100.

The at least one processor may include two types of processors. One type of processor includes at least one data processor 411, and the other type of processor includes at least one iterative processor. As an example instead of a limitation, the data processor 411 may be a CPU, and the iterative processor may be an NPU or a GPU.

It should be understood that the model training server 410 may include at least one iterative processor. For ease of description, an iterative processor 412 and an iterative processor 413 are used as examples for description in FIG. 4.

A deep learning model 100 runs in each of the iterative processor 412 and the iterative processor 413, and in BP calculation performed on the deep learning model 100, each of the iterative processor 412 and the iterative processor 413 may calculate a gradient $g_i^j$ of a weight in a parameter matrix of a neuron at each layer, and store the calculated gradient $g_i^j$ in the memory 414 through the bus 417.

Optionally, in some embodiments, a feedback module 4121 may further run in the iterative processor 412, and similarly, a feedback module 4131 may further run in the iterative processor 413. For details about the feedback modules running in the iterative processor 412 and the iterative processor 413, refer to descriptions in FIG. 6. Details are not described herein.

A gradient communications module 4111, a gradient update module 4112, and a correction module 4113 may run in the at least one data processor 411. For details about the modules running in the data processor 411, refer to descriptions in FIG. 6. Details are not described herein.

After obtaining, from the memory 414 through the bus 417, the gradient $g_i^j$ stored in each of the iterative processor 412 and the iterative processor 413, the at least one data processor 411 may further calculate a gradient average value $G_i^j$ based on a plurality of gradients $g_i^j$ calculated by the iterative processor 412 and the iterative processor 413, and store the gradient average value $G_i^j$ in the memory 414 through the bus 417, so that the iterative processor 412 and the iterative processor 413 use $G_i^j$ in the (j + 1)$^{th}$ round of training.

Specifically, in a BP calculation process in the j$^{th}$ iteration, the iterative processor 412 may calculate a gradient $g_i^j(1)$ corresponding to a neuron at each layer in the deep learning model 100, and store the calculated gradient $g_i^j(1)$ corresponding to the neuron at the i$^{th}$ hidden layer in parameter storage space of the memory 414 through the bus 417. Likewise, the iterative processor 413 may also store, in the parameter storage space of the memory 414 through the bus 417, a calculated gradient $g_i^j(2)$ corresponding to the neuron at the i$^{th}$ hidden layer. The data processor 411 may obtain the stored gradients $g_i^j(1)$ and $g_i^j(2)$ from the parameter storage space of the memory 414 through the bus 417, calculate, based on the gradients $g_i^j(1)$ and $g_i^j(2)$, a gradient average value $G_i^j$ corresponding to the neuron at the i$^{th}$ hidden layer, and store $G_i^j$ in the parameter storage space of the memory 414 through the bus 417. In an FP calculation process in the (j + 1)$^{th}$ iteration, each of the iterative processor 412 and the iterative processor 413 may obtain the gradient average value $G_i^j$ from the parameter storage space of the memory 414 through the bus 417, calculate $w_i^{j+1}$ in a parameter matrix in the (j + 1)$^{th}$ iteration based on the gradient average value $G_i^j$, and perform the FP calculation based on the corrected parameter matrix $w_i^{j+1}$.

Optionally, in some embodiments, the data processor 411 may further obtain the stored gradient average value $G_i^j$ from the parameter storage space of the memory 414 through the bus 417, calculate $w_i^{j+1}$ in the parameter matrix in the (j + 1)$^{th}$ iteration based on the gradient average value $G_i^j$, and store $w_i^{j+1}$ in the parameter storage space of the memory 414. In this way, in the (j + 1)$^{th}$ iteration, each of the iterative processor 412 and the iterative processor 413 may obtain $w_i^{j+1}$, through the bus 417, from the parameter storage space of the memory 414, and perform the FP calculation.

Optionally, in some embodiments, the distributed training system 400 further includes a cloud storage 420. The cloud storage 420 is connected to the model training server 410. The cloud storage 420 may be used as an external memory, and a user may store the program code and the training data in the external memory. In a running process, the at least one processor of the model training server 410 may first store, in the memory 414, the program code and the training data that are stored in the cloud storage 420, so that the at least one processor may obtain the program code and the training data from the memory 414, and perform iterative training on the deep learning model 100 based on the program code and the training data.

The foregoing FIG. 2A to FIG. 4 describe in detail the process of training the deep learning model in the distributed training system 200 or the distributed training system 400. In BP calculation in a current iteration, each deep learning model calculates the gradient $g_i^j$ of the neuron at each layer in a direction from a neuron at the $n^{th}$ layer to the neuron at the first layer, and pushes the calculated gradient $g_i^j$ of the neuron at each layer to the parameter storage space. Generally, in the deep learning model, a larger parameter matrix dimension closer to a neuron at the output layer indicates a larger gradient value corresponding to the parameter matrix and a longer time required for sending the gradient value to the parameter storage space. In FP calculation in a next iteration, the deep learning models sequentially start to obtain the stored parameter average value $G_i^j$ or the parameter matrix $w_i^{j+1}$ from the parameter storage space in a direction from the neuron at the first layer to the neuron at the $n^{th}$ layer. Therefore, in the FP calculation in the next iteration, before starting the FP calculation in the next iteration the deep learning model needs to wait for a gradient corresponding to a parameter matrix on the neuron at the first layer to be transmitted to the parameter storage space. In the BP calculation in the current iteration, if the gradient is sequentially sent to the parameter storage space in a sequence ( $g_n^j$ to $g_1^j$ ) of generating the gradient of the neuron at each layer, a time for starting the next iteration by the deep learning model is relatively long, and iterative training efficiency of the deep learning model is relatively low.

According to a deep learning model training method provided in the embodiments of this application, a sequence of transmitting $g_i^j$ obtained through the BP calculation to the parameter storage space in the current iteration process can be adjusted, to reduce a communication time of each iteration of the deep learning training model, and increase training efficiency of the deep learning model.

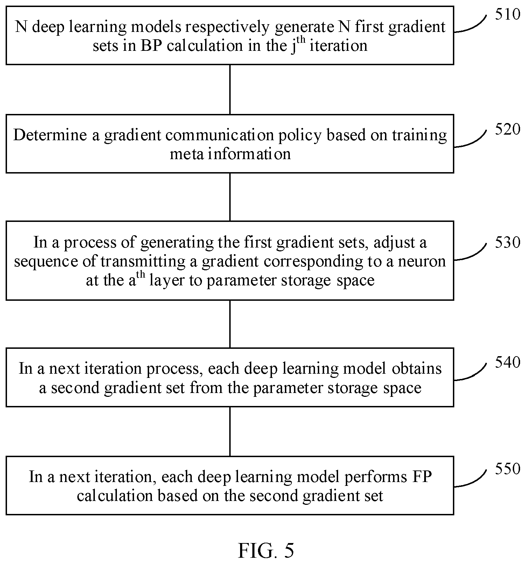

With reference to FIG. 5 to FIG. 7, the following further describes in detail an acceleration training process of a deep learning model in the embodiments of this application.

FIG. 5 is a schematic flowchart of a deep learning model training method according to an embodiment of this application. The method may include steps 510 to 550. The following describes steps 510 to 550 in detail.

Step 510: N deep learning models respectively generate N first gradient sets in BP calculation in the $j^{th}$ iteration.

In this embodiment of this application, a training system may include N deep learning models, where N is a positive integer greater than 0. A training process of each deep learning model may include a plurality of iterations, and a training process of each iteration may include FB calculation and BP calculation.

It should be understood that the training system may be the distributed training system 200 shown in FIG. 2A and FIG. 2B or the distributed training system 400 shown in FIG. 4.

In the BP calculation of the $j^{th}$ iteration, each deep learning model calculates a gradient corresponding to a neuron at each layer in a direction from a neuron at the $n^{th}$ layer to a neuron at the first layer, to form the first gradient set. A gradient corresponding to a neuron at the $i^{th}$ layer is $g_i^j$ , and i is a positive integer greater than 0 and less than or equal to n. Any first gradient set may include a gradient $g_i^j$ of a parameter matrix corresponding to a neuron at each of the n layers in the deep learning model, that is, include n gradients $g_i^j$ .

Step 520: Determine a gradient adjustment policy based on training meta information.

Before step 510 starts, an adjustment submodule in a gradient communications module may determine the gradient adjustment policy based on a parameter included in the training meta information entered by a user, so that a communications submodule in the gradient communications module separately sends, according to the determined gradient adjustment policy, the gradient included in each of the N first gradient sets to parameter storage space.

The training meta information may include any one of the following parameters: a communication bandwidth between the deep learning model and the parameter storage space, a value of the gradient corresponding to the parameter matrix of the neuron at each layer of the deep learning model, and a time required by the neuron at each layer of the deep learning model in FP calculation.

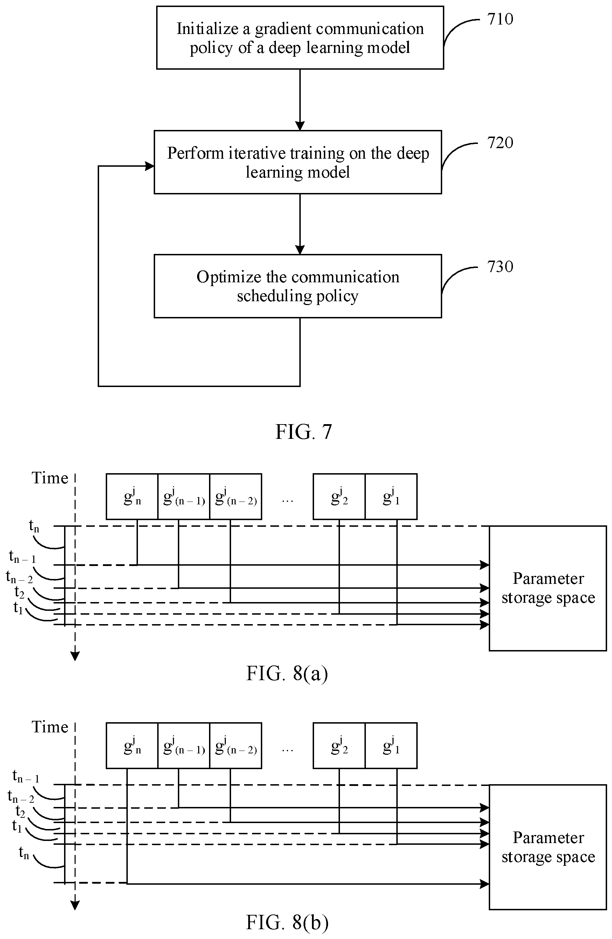

It should be understood that the gradient communication policy may be determined based on at least one of the foregoing parameters. The gradient communication policy includes a sequence of transmitting gradients in the first gradient set to a parameter storage area. The following provides detailed descriptions with reference to FIG. 6 and FIG. 7, and details are not described herein.

It should be noted that step 510 and step 520 are not subject to a sequence. Step 510 may be performed before step 520, or step 520 may be performed before step 510, or step 510 and step 520 may be performed at the same time. This is not specifically limited in this embodiment of this application.

Step 530: In a process of generating the first gradient sets, adjust a sequence of transmitting $g_a^j$ corresponding to a neuron at the $a^{th}$ layer to the parameter storage space.

In this embodiment of this application, in the process of generating the first gradient sets in step 510, according to the gradient communication policy determined in step 520,a sequenceof sending a gradient corresponding to a parameter matrix of the neuron at the $a^{th}$ layer is adjusted to be before a sequence of sending a gradient corresponding to a parameter matrix of a neuron at the $b^{th}$ layerto the parameter storage space, where b is less than or equal to n, a is less than b, and a is a positive integer greater than 0.

For example, the gradient communication policy indicates to send the gradients to the parameter storage space in a sequence of $g_{n-1}^j$, $g_{n-2}^j$, ..., $g_1^j$, and $g_n^j$. In this case, $g_n^j$ may not be transmitted temporarily after $g_n^j$ is generated, $g_{n-1}^j$ is transmitted after $g_{n-1}^j$ is generated, $g_{n-2}^j$ is transmitted after $g_{n-2}^j$ is generated, and so on. After $g_1^j$ is generated and then transmitted to the parameter storage space, the previously generated $g_n^j$ is sent to the parameter storage space. Therefore, adjustment of a transmission sequence of the gradients included in the first gradient set does not need to be performed after all the gradients in the first gradient set are generated.

The distributed training system 200 shown in FIG. 2A and FIG. 2B is used as an example. In the iterative processor 212 in the model training server 210, a deep learning module of the deep learning model 100 may generate the first gradient sets in the BP calculation in the $j^{th}$ iteration, and store, in the process of generating the first gradient sets, the calculated gradient corresponding to the parameter matrix of the neuron in the memory 213. The gradient communications module in the data processor 211 is configured to determine the gradient communication policy. The gradient communication policy is used to indicate a communication sequence of the gradients included in each first gradient set. The gradient communications mudole adjusts, according to the determined gradient communication policy, a sequenc of sending the gradient that corresponds to the parameter matrix of the neuron at the $a^{th}$ layer, that is included in the first gradient set, and that is stored in the memory 213 to the parameter storage space in the memory 243 in the parameter sever 243 to be before a sequence of sending the gradient corresponding to the parameter matrix of the neuron at the $b^{th}$ layer to the parameter storage space.

The model training server 410 shown in FIG. 4 is used as an example. In the iterative processor 412 in the data processor 411 in the model training server 410, a deep learning module of the deep learning model 100 may generate the first gradient sets in the BP calculation in the $j^{th}$ iteration, and store, in the process of generating the first gradient sets, the calculated gradient corresponding to the parameter matrix of the neuron in a memory 4121. The gradient communications module in the data processor 411 adjusts, according to the determined gradient communication policy, a seuqence of sending the gradient that corresponds to the parameter matrix of the neuron at the $a^{th}$ layer, that is included in the first gradient set, and that is stored in the memory 4121 to the parameter storage space of the memory 414 to be before a sequence of seding the gradient corresponding to the parameter matrix of the neuron at the $b^{th}$ layer to the parameter storage space.

It should be understood that, in the system 200 shown in FIG. 2A and FIG. 2B, the gradient communications module may be a set of gradient communications modules of the at least one model training server in the system 200.

It should be further understood that the gradient communications module may include two submodules. One submodule is the adjustment submodule, configured to determine the gradient adjustment policy. The other submodule is the communications submodule, configured to separately send, to the parameter storage space according to the gradient adjustment policy, the gradients included in each of the N first gradient sets.

Step 540: In a $(j + 1)^{th}$ iteration process, each deep learning model obtains a second gradient set from the parameter storage space.

The system 200 shown in FIG. 2A and FIG. 2B is used as an example. The gradient update module 2411 in the data processor 241 in the parameter server 240 obtains the second gradient set based on the N first gradient sets stored in the parameter storage space of the memory 243.

The model training server 410 shown in FIG. 4 is used as an example. The gradient update module 2411 in the data processor 411 in the model training server 410 obtains the second gradient set based on the N first gradient sets stored in the parameter storage space of the memory 414.

In this embodiment of this application, after the gradients included in each of the N first gradient sets are separately sent to the parameter storage space of the training system according to an adjusted communication sequence of the gradients included in each first gradient set, an average value of gradients corresponding to the parameter matrix of the neuron at each layer of each of the N deep learning models can be calculated.

As an example, weighted average calculation may be performed on the gradients of the neuron at each layer included in each of the N first gradient sets, so that the average value of the gradients corresponding to the parameter matrix of the neuron at each layer of each of the N deep learning models can be calculated. Average values of gradients corresponding to parameter matrices of neurons at all layers constitute the second gradient set. In other words, the second gradient set includes the average values of the gradients corresponding to the parameter matrices of the neurons at all the layers of the N deep learning models.

Step 550: Each deep learning model performs the FP calculation based on the second gradient set in the (j + 1)$^{th}$ iteration.

In this embodiment of this application, the model training system may include a correction module, configured to correct a parameter matrix of a neuron at each layer of any one of the deep learning models based on a gradient included in the second gradient set, so that the parameter matrix can be used in the FP calculation in the (i + 1)$^{th}$ iteration of the any one of the deep learning models of the training system.

The system 200 shown in FIG. 2A and FIG. 2B is used as an example. The correction module may be in the data processor 241 of the parameter server 240 or in the data processor 211 of the model training server 210.

Optionally, in some embodiments, the data processor 211 of the model training server 210 includes the correction module 2112. The gradient communications module 2111 of the model training server 210 may obtain the second gradient set from the parameter storage space in the memory 243, and correct the parameter matrix of the neuron at each layer of the deep learning model based on the average value of the gradients of the parameter matrix corresponding to the neuron at each layer that are in the second gradient set. In this way, in BP calculation in a next iteration, an input and an output corresponding to the neuron at each layer are calculated based on a corrected parameter matrix $w_i^{j+1}$.

Optionally, in some other embodiments, the data processor 241 in the parameter server 240 includes the correction module 2411. The correction module 2411 may obtain the second gradient set from the parameter storage space in the memory 243, correct the parameter matrix of the neuron at each layer of the deep learning model based on the average value of the gradients of the parameter matrix corresponding to the neuron at each layer that are in the second gradient set, and store a corrected set including the parameter matrix $w_i^{j+1}$ in the parameter storage space of the memory 243. In this way, in the BP calculation in the next iteration, the gradient communications module 2111 of the model training server 210 may obtain the corrected set including the parameter matrix $w_i^{j+1}$ from the parameter storage space in the memory 243, and calculate, based on $w_i^{j+1}$ in the set, the input and the output corresponding to the neuron at each layer.

It should be noted that, in the system 200 shown in FIG. 2A and FIG. 2B, the correction module may be a set of correction modules of the at least one model training server in the system 200.

The model training server 410 shown in FIG. 4 is used as an example. The data processor 411 in the model training server 410 may include the correction module 4113. The correction module 4113 may obtain the second gradient set from the parameter storage space in the memory 414, correct the parameter matrix of the neuron at each layer of the deep learning model based on the average value of the gradients of the parameter matrix corresponding to the neuron at each layer that are in the second gradient set, and store the corrected set including the parameter matrix $w_i^{j+1}$ in the parameter storage space of the memory 414. In this way, in the BP calculation in the next iteration, the gradient communications module 4111 of the model training server 410 may obtain the corrected set including the parameter matrix $w_i^{j+1}$ from the parameter storage space in the memory 414, and calculate, based on $w_i^{j+1}$ in the set, the input and the output corresponding to the neuron at each layer.

In this embodiment of this application, a sequence of transmitting $g_i^j$ obtained through the BP calculation to the parameter storage space in a current iteration process may be adjusted without affecting training convergence precision of the deep learning model, to reduce a communication time of current iteration, and increase model training efficiency.

The gradient communication policy in an iteration process of each deep learning model is not specifically limited in this embodiment of this application. The gradient communication policy may be set according to an empirical rule, or may be a gradient communication policy compatible with another manner, for example, an intelligent gradient communication policy based on reinforcement learning. With reference to FIG. 6, the following describes in detail a specific implementation of adjusting a communication sequence of the n gradients $g_i^j$ included in the first gradient set.

FIG. 6 is a schematic architectural diagram of a deep learning model training system according to an embodiment of this application. The system architecture may include a user side and a cloud platform side.

As shown in FIG. 6, the user side may input at least one of a deep learning model 100, training meta information 660, and training data 670 to the cloud platform side through an interface.

The training meta information 610 may include a communication bandwidth between the deep learning model 100 and parameter storage space 640, a value of a gradient corresponding to a parameter matrix of a neuron at each layer of the deep learning model 100, and a time required by the neuron at each layer of the deep learning model 100 in FP calculation. The training data 670 may include training data used as an input and a prediction result corresponding to training data provided by a person.

It should be noted that the deep learning model 100 may be sent by the user side to the cloud platform side through the interface, or may be a model stored on the cloud platform side. This is not specifically limited in this application.

The cloud platform side may include a gradient communications module 620, a local memory 630, the parameter storage space 640, and a deep learning model 100.

Optionally, in some embodiments, the cloud platform side may further include a cloud storage 610. The cloud storage 610 may store the deep learning model 100, the training meta information 660, and the training data 670 that are sent by the user side.

Optionally, in some embodiments, the cloud platform side may further include a feedback module 650.

Referring to FIG. 6, the gradient communications module 620 on the cloud platform side may include an adjustment submodule 621 and a communications submodule 622. The adjustment submodule 621 may be configured to perform the method in step 520, and the communications submodule 622 may be configured to perform the method in step 530. The feedback module 650 on the cloud platform side may be configured to perform the method in step 540.

It should be understood that the platform side may correspond to the distributed training system 200 shown in FIG. 2A and FIG. 2B or the distributed training system 400 shown in FIG. 4.

The following uses the distributed training system 200 shown in FIG. 2A and FIG. 2B as an example to describe in detail an iteration process of the deep learning model 100 on the cloud platform side shown in FIG. 6.

It should be noted that, for FIG. 2A and FIG. 2B, the gradient communications module 620 shown in FIG. 6 corresponds to a set of the gradient communications module 2111 in the model training server 210 and gradient communications modules running in the model training server 220 and the model training server 230 in FIG. 2A and FIG. 2B. The feedback module 650 corresponds to a set of the feedback module 2121 in the model training server 210 and feedback modules running in the model training server 220 and the model training server 230 in FIG. 2A and FIG. 2B. For FIG. 4, the feedback module 650 corresponds to a set of the feedback module 4121 in the iterative processor 412 and the feedback module 4131 in the iterative processor 413 in FIG. 4.

The adjustment submodule 621 may determine a gradient communication policy based on the training meta information 660. For details, refer to the descriptions in step 520. Details are not described herein again.

When the deep learning model 100 starts training, a deep learning module of the deep learning model 100 obtains the training data 670 from the cloud storage 610, and starts iterative training of the model based on the training data 670. In BP calculation in a current iteration, the communications submodule 622 may be configured to perform the method in step 530. The communications submodule 622 may send, according to the gradient communication policy determined by the adjustment submodule 621, gradients stored in the local memory 630 to the parameter storage area 640 in an adjusted sequence. When starting FP calculation in a next iteration, the deep learning model 100 may obtain stored data from the parameter storage area 640, and start the FP calculation based on the data. For details, refer to the descriptions in FIG. 530, and details are not described herein again.

It should be understood that the local memory 630 is a set of the memory 213 in the model training server 210 and memories in the model training server 220 and the model training server 230 in the distributed training system 200.

It should be further understood that the parameter storage area 640 corresponds to the memory 243 in the parameter server 240 in the distributed training system 200.

The feedback module 650 may obtain an iteration time of the deep learning model 100, and the iteration time may include a time for the BP calculation in the current iteration of the deep learning model 100 and a time for the FP calculation in the next iteration of the deep learning model 100. For example, the feedback module 650 may obtain a time for BP calculation in the $L^{th}$ iteration of the deep learning model 100 and a time for FP calculation in the $(L + 1)^{th}$ iteration of the deep learning model 100, where L is a positive integer greater than j. The feedback module 650 may feed back the iteration time of the deep learning model 100 to the adjustment submodule 621 in the gradient communications module 620. After receiving the iteration time that is of the deep learning model 100 and that is fed back by the feedback module 650, the adjustment submodule 621 may adjust the determined gradient communication policy, so that a subsequent iterative training speed is faster. For details, refer to the descriptions in FIG. 540, and details are not described herein again.

The following further explains and describes the deep learning training model training method with reference to FIG. 6 by using an example in which a facial recognition model is ResNet50 and a computing engine is TensorFlow.

FIG. 7 is a schematic flowchart of a deep learning model training method according to an embodiment of this application. The method shown in FIG. 7 may include steps 710 to 730. The following separately describes steps 710 to 730 in detail.

It should be noted that the examples in FIG. 7 are merely intended to help a person skilled in the art understand this embodiment of this application, instead of limiting this embodiment of this application to a specific value or a specific scenario shown in the examples. A person skilled in the art can apparently make various equivalent modifications or changes according to the examples shown in FIG. 7, and such modifications or changes also fall within the scope of the embodiments of this application.

Step 710: Initialize a gradient communication policy of a deep learning model.

The facial recognition model ResNet50 (a quantity of categories is 10,000) is used as an example. A quantity of parameters in a corresponding parameter matrix of a neuron at the last layer (a fully connected (fully connected, FC) layer) of the ResNet50 face model is about 78 MB, which accounts for about half of a size of the entire model. A larger calculated gradient corresponding to the neuron at this layer indicates a longer communication time required for sending the gradient to parameter storage space.

Therefore, during initialization, it is assumed that the ResNet50 face model has n layers of neurons. A sequence of sending a corresponding gradient $g_n^j$ on the neuron at the FC layer, namely, the last layer, of the model is adjusted to after a sequence of sending a gradient $g_1^j$ corresponding to a parameter matrix of a neuron at the first layer to the parameter storage space, the gradient $g_1^j$ corresponding to the parameter matrix of the neuron at the first layer is transmitted to the parameter storage space. In other words, after the gradient $g_1^j$ corresponding to the parameter matrix of the neuron at the first layer is transmitted to the parameter storage space, FB calculation in a next iteration may be started, so that the gradient $g_n^j$ corresponding to the parameter matrix of the neuron at the last layer is transmitted to the parameter storage space within a time period of the FB calculation in the next iteration.

FIG. 8(a) represents at least one deep learning model 100. Gradients $g_n^j$ to $g_1^j$ included in a first gradient set obtained through BP calculation in the $j^{th}$ iteration are sequentially transmitted to the parameter storage space in a sequence from a neuron at the $n^{th}$ layer to the neuron at the first layer. $t_n$ represents a communication time required for transmitting the gradient $g_n^j$ that corresponds to the neuron at the $n^{th}$ layer and that is obtained through the BP calculation to the parameter storage space, $t_{n-1}$ represents a communication time required for transmitting a gradient $g_{n-1}^j$ that corresponds to the neuron at the $n^{th}$ layer and that is obtained through the BP calculation to the parameter storage space, ..., and $t_1$ represents a communication time required for transmitting the gradient $g_1^j$ corresponding to the neuron at the first layer to the parameter storage space. A time for triggering the deep learning model to perform the FP calculation in the next iteration (the $(j + 1)^{th}$ iteration) is a time for transmitting, to the parameter storage space, the gradient corresponding to the neuron at the first layer in the BP calculation in the $j^{th}$ iteration. Referring to FIG. 8(a), a time period from a time for obtaining $g_n^j$ through the BP calculation in the $j^{th}$ iteration to a time for triggering the deep learning model to perform the FP calculation in the $(j + 1)^{th}$ iteration is not less than $T_1$, where $T_1 = t_n + t_{n-1} +... + t_2 + t_1$. To be specific, after a transmission time $T_1$, the deep learning model can perform the FP calculation in the next iteration.

FIG. 8(b) represents at least one deep learning model 100. According to a solution for acceleration training of a deep learning model provided in the embodiments of this application, in a process of obtaining corresponding gradients $g_i^j$ from the neuron at the $n^{th}$ layer to the neuron at the first layer though the BP calculation, according to a communication scheduling policy, the sequence of sending the gradient $g_n^j$ corresponding to the parameter matrix of the neuron at the $n^{th}$ layer is adjusted to be after a sequence of sending the gradient corresponding to the parameter matrix of the neuron at the first layer to the parameter storage space. A time for triggering the deep learning model to perform the FP calculation in the next iteration is a time for transmitting, to the parameter storage space, the gradient corresponding to the neuron at the first layer in the BP calculation in the $j^{th}$ iteration. Referring to FIG. 8(b), a time period from a time for obtaining

$g_n^j$ through the BP calculation in the j$^{th}$ iteration to a time for triggering the deep learning model to perform the FP calculation in the (j + 1)$^{th}$ iteration is not less than $T_2$, where $T_2$ = a time required for calculating $g_{n-1}^j$ in the BP calculation in the j$^{th}$ iteration + $t_{n-1}$ + ... + $t_2$ + $t_1$. To be specific, after the transmission time $T_2$, the deep learning model can perform the FP calculation in the next iteration. After the time $t_1$, the gradient $g_n^j$ corresponding to the neuron at the n$^{th}$ layer is transmitted to the parameter storage space.

Generally, because performance of an iterative processor is improved day by day, a time required for obtaining a gradient through BP calculation is less than a time required for transmitting the calculated gradient to the parameter storage space. If the time required for obtaining the gradient through BP calculation is greater than the time required for transmitting the calculated gradient to the parameter storage space, a case in which the time period from the time for obtaining $g_n^j$ through the BP calculation in the j$^{th}$ iteration to the time for triggering the deep learning model to perform the FP calculation in the (j + 1)$^{th}$ iteration is greater than $T_1$ or $T_2$ is caused.

The time $T_2$ for triggering the deep learning model to perform the FP calculation in the next iteration in FIG. 8(b) is less than the time $T_1$ for triggering the deep learning model to perform the FP calculation in the next iteration in FIG. 8(a). Therefore, according to the deep learning model training method provided in the embodiments of this application, a sequence of transmitting $g_i^j$ obtained through the BP calculation to the parameter storage space in a current iteration process can be adjusted, to reduce a communication time of a current iteration, and increase model training efficiency.

Step 720: Perform iterative training on the deep learning model.

The initialized gradient communication policy is written into the adjustment submodule 621 in the gradient communications module 620 in FIG. 6. The communications submodule 622 sends, to the parameter storage space 640 according to the gradient communication policy determined by the adjustment submodule 621, the gradient in the first gradient set stored in the local memory 630.

The feedback module 650 may obtain an iteration time of the deep learning model 100 from a deep learning module of the deep learning model 100. The iteration time may include a time for the BP calculation in the current iteration of the deep learning model 100 and the time for the FP calculation in the next iteration of the deep learning model 100. In addition, the iteration time of the deep learning model 100 may be fed back to the adjustment submodule 621 in the gradient communications module 620.

Step 730: Optimize the gradient communication policy in the deep learning model.

After receiving the iteration time that is of the deep learning model 100 and that is fed back by the feedback module 650, the adjustment submodule 621 may adjust the determined gradient communication policy, so that a subsequent iterative training speed is faster. After a plurality of times of iteration and adjustment of the gradient communication policy, an optimal gradient communication policy is found, and then the optimal gradient communication policy is used to perform the iterative training of the deep learning model 100 in a subsequent training step.

In this embodiment of this application, a training speed of the deep learning model is increased only by adjusting a communication sequence of gradients without affecting training convergence precision of the deep learning model. A current deep learning model basically depends on a BP algorithm (including a back propagation through time (back propagation through time, BPTT) algorithm), most open-source deep learning engines (such as the TensorFlow) are also implemented based on the BP algorithm. Therefore, the method for acceleration training of a deep learning model provided in the embodiments of this application has extensive applications.

All or some of the foregoing embodiments may be implemented by using software, hardware, firmware, or any combination thereof. When software is used to implement the embodiments, the foregoing embodiments may be implemented entirely or partially in a form of a computer program product. The computer program product includes one or more computer instructions. When the computer program instructions are loaded and executed on a computer, the procedure or functions according to the embodiments of this application are entirely or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive (solid state drive, SSD).

An embodiment of this application further provides a computer program product. The computer program product includes a program instruction, and when the program instruction is run on a computer, the computer is enabled to perform the methods in the foregoing aspects.

An embodiment of this application further provides a computer-readable medium. The computer-readable medium stores a program instruction, and when the program instruction is run on a computer, the computer is enabled to perform the methods in the foregoing aspects.

Aspects or features of this application may be implemented as a method, an apparatus or a product that uses standard programming and/or engineering technologies. The term "product" used in this application covers a computer program that can be accessed from any computer readable component, carrier or medium. For example, the computer-readable medium may include but is not limited to: a magnetic storage component (for example, a hard disk, a floppy disk or a magnetic tape), an optical disc (for example, a compact disc (compact disc, CD)), a digital versatile disc (digital versatile disc, DVD), a smart card and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel and various other media that can store, contain, and/or carry an instruction and/or data.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for indicating a computer device (which may be a personal computer, a server, or a network device) to perform all or some of the steps of the methods described in the embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

**Claims**

1. A deep learning model training method, wherein a training system to which the method is applied comprises N deep learning models, each deep learning model comprises n layers of neurons, a training process of each deep learning model comprises a plurality of iterations, and each iteration comprises forward propagation FP calculation and back propagation BP calculation, N is a positive integer greater than 1, n is a positive integer greater than 1, and the method comprises:

generating N first gradient sets in BP calculation in the $j^{th}$ iteration of the N deep learning models, wherein each first gradient set comprises a gradient corresponding to a parameter matrix of a neuron at each layer of one deep learning model, and j is a positive integer greater than 0;

adjusting a communication sequence of the gradients comprised in each first gradient set;

separately sending, according to an adjusted communication sequence of the gradients comprised in each first gradient set, the gradients comprised in each of the N first gradient sets to parameter storage space of the training system;

obtaining a second gradient set based on the N first gradient sets stored in the parameter storage space; and correcting a parameter matrix of a neuron at each layer of each deep learning model based on a gradient comprised in the second gradient set, to perform FP calculation in the $(j + 1)^{th}$ iteration on each deep learning model.

2. The method according to claim 1, wherein the adjusting a communication sequence of the gradients comprised in each first gradient set comprises:

adjusting a sequence of sending a gradient corresponding to a parameter matrix of a neuron at the $a^{th}$ layer to the parameter storage space to be before a sequence of sending a gradient corresponding to a parameter matrix of a neuron at the $b^{th}$ layer to the parameter storage space, wherein b is less than or equal to n, a is less than b, and a is a positive integer greater than 0.

3. The method according to claim 1 or 2, wherein the adjusting a communication sequence of the gradients comprised in each first gradient set comprises:

adjusting, according to a gradient communication policy, the communication sequence of the gradients comprised in each first gradient set, wherein

the gradient communication policy is set based on at least one of the following parameters: a communication bandwidth between the deep learning model and the parameter storage space, a value of the gradient corresponding to the parameter matrix of the neuron at each layer of the deep learning model, and a time required by the neuron at each layer of the deep learning model in FP calculation.

4. The method according to any one of claims 1 to 3, wherein the adjusting a communication sequence of the gradients comprised in each first gradient set comprises:

adjusting, according to the gradient communication policy, the communication sequence of the gradients comprised in each first gradient set; and

the method further comprises:

obtaining an iteration time of the deep learning model, wherein the iteration time comprises a time for BP calculation in the $L^{th}$ iteration of the deep learning model and a time for FP calculation in the $(L + 1)^{th}$ iteration of the deep learning model, and L is a positive integer greater than j; and

adjusting the gradient communication policy based on the iteration time.

5. A deep learning model training system, wherein the training system comprises N deep learning models, a gradient communications module, a gradient update module, a correction module, and parameter storage space, each of the deep learning models comprises n layers of neurons, a training process of each of the deep learning models comprises a plurality of iterations, each iteration comprises forward propagation FP calculation and back propagation BP calculation, N is a positive integer greater than 1, and n is a positive integer greater than 1;

each deep learning module of the N deep learning models is configured to generate a first gradient set in BP calculation in the $j^{th}$ iteration, and each first gradient set comprises a gradient corresponding to a parameter matrix of a neuron at each layer of each deep learning model, and j is a positive integer greater than 0;

the gradient communications module is configured to: adjust a communication sequence of the gradients comprised in each first gradient set, and separately send, to the parameter storage space according to an adjusted communication sequence of the gradients comprised in each first gradient set, the gradients comprised in each of the N first gradient sets;

the gradient update module is configured to obtain a second gradient set based on the N first gradient sets stored in the parameter storage space; and

the correction module is configured to correct the parameter matrix of the neuron at each layer of each deep learning model based on a gradient comprised in the second gradient set, to perform FP calculation in the $(j + 1)^{th}$ iteration of each deep learning model.

6. The system according to claim 5, wherein the gradient communications module is configured to:
adjust a sequence of sending a gradient corresponding to a parameter matrix of a neuron at the $a^{th}$ layer to the parameter storage space to be before a sequence of sending a gradient corresponding to a parameter matrix of a neuron at the $b^{th}$ layer to the parameter storage space, wherein b is less than or equal to n, a is less than b, and a is a positive integer greater than 0.

7. The system according to claim 5 or 6, wherein the gradient communications module is configured to:

adjust, according to a gradient communication policy, the communication sequence of the gradients comprised in each first gradient set; and
the gradient communication policy is set based on at least one of the following parameters: a communication bandwidth between the deep learning model and the parameter storage space, a value of the gradient corresponding to the parameter matrix of the neuron at each layer of the deep learning model, and a time required by the neuron at each layer of the deep learning model in FP calculation.

8. The system according to any one of claims 5 to 7, wherein the training system further comprises a feedback module, wherein

the feedback module is configured to feed back an obtained iteration time of the deep learning model to the gradient communications module, the iteration time comprises a time for BP calculation in the $L^{th}$ iteration of the deep learning model and a time for FP calculation in the $(L + 1)^{th}$ iteration of the deep learning model, and L is a positive integer greater than j; and
the gradient communications module is further configured to adjust the gradient communication policy based on the iteration time.

9. A deep learning model training system, wherein the training system comprises at least one computing node, each computing node comprises a memory and at least one processor, the memory is configured to store a program instruction, and the at least one processor of the at least one computing node executes the program instruction in the memory to perform the operation steps of the method according to any one of claims 1 to 4.

10. A non-transient readable storage medium, comprising a program instruction, wherein when the program instruction is run by at least one computing node, the at least one computing node performs the method according to any one of claims 1 to 4.

11. A computer program product, comprising a program instruction, wherein when the program instruction is run by at least one computing node, the at least one computing node performs the method according to any one of claims 1 to 4.

FIG. 1

200

210

Model training server

211

Data processor

Gradient communications module 2111

Correction module 2112

212

Iterative processor

Deep learning model 100

Feedback module 2121

216

215

Communications interface

Memory

213

Program instruction

214

Input/Output interface

220

Model training server

TO
FIG. 2B

250

Cloud storage

Training data

FIG. 2A

FIG. 2B

Perform a $j^{th}$ iterative training process on a model 100

210

Model training server

220

Model training server

230

Model training server

240

Parameter server

243

Memory

$g_i^j(1)$
$g_i^j(2)$
$g_i^j(3)$
$G_i^j$
$W^{j+1}_i$

Perform a $(j + 1)^{th}$ iterative training process on the model 100

210

Model training server

220

Model training server

230

Model training server

FIG. 3

400

FIG. 4

N deep learning models respectively generate N first gradient sets in BP calculation in the $j^{th}$ iteration ⌐ 510

Determine a gradient communication policy based on training meta information ⌐ 520

In a process of generating the first gradient sets, adjust a sequence of transmitting a gradient corresponding to a neuron at the $a^{th}$ layer to parameter storage space ⌐ 530

In a next iteration process, each deep learning model obtains a second gradient set from the parameter storage space ⌐ 540

In a next iteration, each deep learning model performs FP calculation based on the second gradient set ⌐ 550

FIG. 5

FIG. 6

Initialize a gradient communication
policy of a deep learning model — 710

Perform iterative training on the deep
learning model — 720

Optimize the communication
scheduling policy — 730

FIG. 7

Time

$g^j_n$  $g^j_{(n-1)}$  $g^j_{(n-2)}$  ...  $g^j_2$  $g^j_1$

$t_n$

$t_{n-1}$

$t_{n-2}$

$t_2$

$t_1$

Parameter
storage space

FIG. 8(a)

Time

$g^j_n$  $g^j_{(n-1)}$  $g^j_{(n-2)}$  ...  $g^j_2$  $g^j_1$

$t_{n-1}$

$t_{n-2}$

$t_2$

$t_1$

$t_n$

Parameter
storage space

FIG. 8(b)

## INTERNATIONAL SEARCH REPORT

| International application No. |
|---|
| **PCT/CN2019/072895** |

**A. CLASSIFICATION OF SUBJECT MATTER**

G06N 3/08(2006.01)i

According to International Patent Classification (IPC) or to both national classification and IPC

**B. FIELDS SEARCHED**

Minimum documentation searched (classification system followed by classification symbols)

G06N

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 深度学习模型, 神经网络, 训练, 前向传播, 反向传播, 梯度, 参数, 传输, 发送, 顺序, 先后, 存储, 同步, neural network, deep learning, CNN, training, FP, forward propagation, BP, back propagation, gradient, order, sequence, synchronization

**C. DOCUMENTS CONSIDERED TO BE RELEVANT**

| Category* | Citation of document, with indication, where appropriate, of the relevant passages | Relevant to claim No. |
|---|---|---|
| A | CN 107273975 A (PEKING UNIVERSITY) 20 October 2017 (2017-10-20) description, paragraphs [0040]-[0054] | 1-11 |
| A | 陈建廷 等 (CHEN, Jianting et al.). "深度神经网络训练中梯度不稳定现象研究综述 (Survey of Unstable Gradients in Deep Neural Network Training)" 软件学报 (Journal of Software), Vol. 29, No. no. 7, 30 July 2018 (2018-07-30), ISSN: 1000-9825, pp. 2071-2091 | 1-11 |
| A | CN 108053029 A (NINGBO SHANQIU ELECTRONIC TECH CO., LTD.) 18 May 2018 (2018-05-18) entire document | 1-11 |
| A | CN 107516127 A (SHANDONG UNIVERSITY) 26 December 2017 (2017-12-26) entire document | 1-11 |
| A | US 2017061281 A1 (INTERNATIONAL BUSINESS MACHINES CORPORATION) 02 March 2017 (2017-03-02) entire document | 1-11 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 September 2019** | **15 October 2019** |

| Name and mailing address of the ISA/CN | Authorized officer |
|---|---|
| **China National Intellectual Property Administration**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/072895**

| Patent document cited in search report | | | Publication date (day/month/year) | Patent family member(s) | Publication date (day/month/year) |
|---|---|---|---|---|---|
| CN | 107273975 | A | 20 October 2017 | None | |
| CN | 108053029 | A | 18 May 2018 | None | |
| CN | 107516127 | A | 26 December 2017 | None | |
| US | 2017061281 | A1 | 02 March 2017 | None | |

Form PCT/ISA/210 (patent family annex) (January 2015)

**REFERENCES CITED IN THE DESCRIPTION**

**Patent documents cited in the description**

• CN 201910041235